# EUROPÄISCHE PATENTANMELDUNG

(11) **EP 4 604 034 A1**
(43) Veröffentlichungstag der Anmeldung: **20.08.2025**
(21) Anmeldenummer: 25157122.0
(22) Anmeldetag: 11.02.2025
(51) Int. Cl.: G06Q 10/08, B07C 3/00, G06Q 50/60

(54) **VERFAHREN UND VORRICHTUNG ZUM BEARBEITEN UND SORTIEREN VON SENDUNGEN**

(30) Priorität: 13.02.2024 DE 102024103980
(71) Anmelder: Deutsche Post AG, 53113 Bonn (DE)
(72) Erfinder: FELLINE, Robert, 60528 Frankfurt am Main (DE); HAUSMANN, Angela, 53129 Bonn (DE)
(74) Vertreter: Cohausz & Florack

(57) **Zusammenfassung**

Offenbart wird u.a. ein Verfahren umfassend: Bestimmen, für jede Sendung aus einer Anzahl von Sendungen, eines jeweiligen Sortierziels aus einer Anzahl von Sortierzielen; Zuweisen, zu jeder der Sendungen aus der Anzahl von Sendungen, einer jeweiligen, sortierzielspezifischen Eingangsnummer; wobei das Verfahren für zumindest ein Sortierziel der Anzahl von Sortierzielen ferner umfasst: Einordnen derjenigen Sendungen, für die das Sortierziel bestimmt wurde, in das Sortierziel basierend auf den diesen Sendungen zugewiesenen sortierzielspezifischen Eingangsnummern; und Bestimmen einer Zustellreihenfolge für die in das Sortierziel eingeordneten Sendungen basierend auf einer Sendungsinformation und Ausgeben einer entsprechend der Zustellreihenfolge der in das Sortierziel eingeordneten Sendungen sortierten Abfolge der diesen Sendungen zugewiesenen Eingangsnummern; oder Ausgeben, zu jeder derjenigen Sendungen, für die das Sortierziel bestimmt wurde, der jeweiligen, zugewiesenen Eingangsnummer und einer jeweiligen Sendungsinformation, wobei basierend auf den Sendungsinformationen der Sendungen eine Zustellreihenfolge für diese Sendungen bestimmt werden kann. Ein zugehöriges zweites Verfahren wird ebenfalls offenbart, das Verfahren umfassend: Erfassen, durch eine Zustellentität, oder Ausgeben, an eine Zustellentität, der Eingangsnummern in der sortierten Abfolge, wobei eine Anzahl von Sendungen nach den Eingangsnummern sortiert ist und eine Zustellentität basierend auf einer Eingangsnummer die der Eingangsnummer zugeordnete Sendung innerhalb der sortierten Anzahl von Sendungen auffinden kann. Darüber hinaus werden entsprechende Vorrichtungen, Systeme und Computerprogramme zur jeweiligen Ausführung und/oder Steuerung der offenbarten Verfahren offenbart.

## Beschreibung

### Gebiet

Beispielhafte Ausführungsformen der Erfindung betreffen Verfahren, Vorrichtungen, Systeme und Computerprogramme zum Sortieren und Zustellen von Sendungen, wobei es sich bei den Sendungen insbesondere um Sendungen handelt, bei denen eine Sortierung entsprechend der Zustellreihenfolge nicht oder nur mit großem Aufwand möglich ist

### Hintergrund

Bei Zustell- oder Lieferdiensten erfolgt die Verteilung von Sendungen aufgeteilt in Verteilgebiete. Jedes Verteilgebiet besitzt ein Verteilzentrum, indem die Sendungen nach den jeweiligen Zustellern und für deren Zustelltouren sortiert werden. Dabei werden verschiedene Sendungsformate separat verarbeitet, wie beispielsweise Standardbriefe, Maxibriefe und nicht-maschinenfähige Sendungen, die nicht durch eine Maschine sortiert werden können.

Automatisch verarbeitbare Sendungen werden in den Sortieranlagen des Verteilzentrums bis zur Gangfolge sortiert Die Gangfolge entspricht dabei der Reihenfolge, in der der Zusteller die Sendungen auf seiner Zustelltour benötigt.

Nicht-maschinenfähige Sendungen, wie z.B. solche mit ungewöhnlichen Formaten, oder aus anderen Gründen nicht automatisch verarbeitbare Sendungen werden im Verteilzentrum zunächst auf die örtlichen Sendungsverteilstandorte, wie beispielsweise Zustellstützpunkte oder Depots, anschließend auf die Zusteller und in einem letzten Schritt vom Zusteller im örtlichen Sendungsverteilstandort manuell auf Gangfolge sortiert

### Zusammenfassung einiger beispielhafter Ausführungsformen der Erfindung

In Bezug auf den Zustellprozess ist es erstrebenswert, dass der Zusteller während der Zustellung ohne großen Aufwand erfassen kann, welche die nächste zuzustellende Sendung ist und wo sich diese innerhalb seiner Transportbehälter befindet

Hinsichtlich der Bearbeitung in den Verteilzentren ist es wünschenswert, dass Sendungen direkt nach ihrem Eintreffen bearbeitet werden können. Bei den bekannten Methoden zur Sortierung nach Gangfolge in mehreren Sortierdurchläufen kann die Gangfolgesortierung erst dann durchgeführt werden, wenn alle Sendungen einer Zustelltour im Verteilzentrum bekannt sind. Bei großen Sendungsmengen ist es möglich, dass die vorhandene Sortierkapazität im Verteilzentrum nicht ausreichend ist, um nach Eintreffen der letzten Sendung alle Sendungen auf Gangfolge zu sortieren. Zu spät eintreffende Sendungen bzw. aufgrund der Sortierkapazität nicht berücksichtigte Sendungen können erst im nächsten Sortierturnus, z.B. am nächsten Tag, auf Gangfolge sortiert werden oder müssen dem Zusteller unsortiert übergeben werden.

Jedoch ist es wünschenswert, dass der Zusteller möglichst direkt mit der Zustellung beginnen kann, nachdem er alle für seine Zustelltour benötigten Sendungen erhalten hat. Die manuelle Sortierung von nicht automatisch auf Gangfolge sortierten Sendungen durch den Zusteller im örtlichen Sendungsverteilstandort (beispielsweise im Zustellstützpunkt oder Depot) bedeutet neben dem Zeitverlust auch einen zusätzlichen Platzbedarf im örtlichen Sendungsverteilstandort, da jedem Zusteller ein Sortierbereich zur Verfügung stehen muss.

Die vorliegende Erfindung hat sich die Aufgabe gestellt, einen oder mehrere der oben beschriebenen Nachteile zu überwinden und/oder einen oder mehrere der oben beschriebenen Vorteile zu erhalten und/oder eine oder mehrere der oben beschriebenen angestrebten Verbesserungen zu erreichen.

Gemäß einem ersten beispielhaften Aspekt der Erfindung wird ein Verfahren offenbart, welches beispielsweise von einer Sortieranlage (z.B. in den Verteilzentren) durchgeführt wird, das Verfahren umfassend:
Bestimmen, für jede Sendung aus einer Anzahl von Sendungen, eines jeweiligen Sortierziels aus einer Anzahl von Sortierzielen;
Zuweisen, zu jeder der Sendungen aus der Anzahl von Sendungen, einer jeweiligen sortierzielspezifischen Eingangsnummer;
wobei das Verfahren für zumindest ein Sortierziel der Anzahl von Sortierzielen ferner umfasst: Einordnen derjenigen Sendungen, für die das Sortierziel bestimmt wurde, in das Sortierziel basierend auf den diesen Sendungen zugewiesenen sortierzielspezifischen Eingangsnummern; und
   Bestimmen, für zumindest das eine Sortierziel der Anzahl von Sortierzielen, einer Zustellreihenfolge für die in das Sortierziel eingeordneten Sendungen basierend auf einer Sendungsinformation; und
   Ausgeben, für zumindest das eine Sortierziel der Anzahl von Sortierzielen, einer entsprechend der Zustellreihenfolge der in das Sortierziel eingeordneten Sendungen sortierten Abfolge der diesen Sendungen zugewiesenen Eingangsnummern;
      oder
   Ausgeben, für zumindest das eine Sortierziel der Anzahl von Sortierzielen, zu jeder derjenigen Sendungen, für die das Sortierziel bestimmt wurde, der jeweiligen, zugewiesenen Eingangsnummer und einer jeweiligen Sendungsinformation, wobei basierend auf den Sendungsinformationen der Sendungen eine Zustellreihenfolge für diese Sendungen bestimmt werden kann.

Das Einordnen der Sendungen in das Sortierziel basierend auf den zugewiesenen Eingangsnummern beschreibt dabei insbesondere ein physisches Einordnen in ein physisches Sortierziel.

Gemäß einem zweiten beispielhaften Aspekt der Erfindung wird ein Verfahren offenbart, das Verfahren umfassend:
Erhalten einer sortierten Abfolge von Eingangsnummern, wobei eine Eingangsnummer jeweils einer Sendung aus einer Anzahl von Sendungen zugewiesen ist, und wobei die Abfolge der Eingangsnummern entsprechend einer Zustellreihenfolge der zugeordneten Sendungen sortiert ist;
   oder
Erhalten, für jede Sendung aus einer Anzahl von Sendungen, einer der jeweiligen Sendung zugewiesenen Eingangsnummer und einer jeweiligen Sendungsinformation, wobei basierend auf den Sendungsinformationen der Sendungen eine Zustellreihenfolge für diese Sendungen bestimmt werden kann; und
Bestimmen einer Zustellreihenfolge für die Sendungen zumindest basierend auf den Sendungsinformationen; und
Bestimmen einer entsprechend der Zustellreihenfolge der Sendungen sortierten Abfolge der diesen Sendungen zugewiesenen Eingangsnummern;
   und
Erfassen, durch eine Zustellentität, oder Ausgeben, an eine Zustellentität, der Eingangsnummern in der sortierten Abfolge, wobei die Anzahl von Sendungen nach den Eingangsnummern sortiert ist und die Zustellentität basierend auf einer Eingangsnummer die der Eingangsnummer zugeordnete Sendung innerhalb der sortierten Anzahl von Sendungen auffinden kann.

Die gemäß dem ersten und zweiten Aspekt der Erfindung offenbarten Verfahren stellen einen zuverlässigen und schnellen Zustellprozess sicher, insbesondere für Sendungen, die nicht nach Gangfolge sortiert sind. Das Erfordernis der schnellen Auffindbarkeit der Sendungen im Zustellprozess wird dabei durch die Einführung von Eingangsnummern, die Sortierung der Sendungen nach den Eingangsnummern und die Ausgabe der sortierten Abfolge der Eingangsnummern erreicht. Da auf die im Vergleich zur Sortierung nach Eingangsnummern aufwendige Gangfolgesortierung der Sendungen verzichtet werden kann, wird der Sortierprozess somit erfindungsgemäß erheblich vereinfacht und beschleunigt, so dass eine geringere Dimensionierung der entsprechenden Sortieranlagen bei gleicher Sendungsmenge möglich wird.

Die vorliegende Anmeldung offenbart ferner, für jeden der beiden beispielhaften Aspekte der Erfindung:
- Ein Computerprogramm, umfassend Programmanweisungen, die einen Prozessor zur Ausführung und/oder Steuerung des Verfahrens gemäß dem jeweiligen Aspekt der Erfindung veranlassen, wenn das Computerprogramm auf dem Prozessor läuft Unter einem Prozessor sollen in dieser Spezifikation unter anderem Kontrolleinheiten, Mikroprozessoren, Mikrokontrolleinheiten wie Mikrocontroller, digitale Signalprozessoren (DSP), Anwendungsspezifische Integrierte Schaltungen (ASICs) oder Field Programmable Gate Arrays (FPGAs) verstanden werden. Dabei können entweder alle Schritte des Verfahrens gesteuert werden, oder alle Schritte des Verfahrens ausgeführt werden, oder einer oder mehrere Schritte gesteuert und einer oder mehrere Schritte ausgeführt werden. Das Computerprogramm kann beispielsweise über ein Netzwerk wie das Internet, ein Telefon- oder Mobilfunknetz und/oder ein lokales Netzwerk verteilbar sein. Das Computerprogramm kann zumindest teilweise Software und/oder Firmware eines Prozessors sein. Es kann gleichermaßen zumindest teilweise als Hardware implementiert sein. Das Computerprogramm kann beispielsweise auf einem computerlesbaren Speichermedium gespeichert sein, z.B. einem magnetischen, elektrischen, optischen und/oder andersartigen Speichermedium. Das Speichermedium kann beispielsweise Teil des Prozessors sein, beispielsweise ein (nicht-flüchtiger oder flüchtiger) Programmspeicher des Prozessors oder ein Teil davon. Das Speichermedium kann beispielsweise ein gegenständliches oder körperliches Speichermedium sein.
- Eine Vorrichtung oder ein System umfassend zumindest zwei Vorrichtungen, wobei die Vorrichtung bzw. das System eingerichtet ist zur Ausführung und/oder Steuerung des Verfahrens gemäß dem jeweiligen Aspekt der Erfindung oder umfassend jeweilige Mittel zur Ausführung und/oder Steuerung der Schritte des Verfahrens gemäß dem jeweiligen Aspekt der Erfindung. Dabei können entweder alle Schritte des Verfahrens gesteuert werden, oder alle Schritte des Verfahrens ausgeführt werden, oder einer oder mehrere Schritte gesteuert und einer oder mehrere Schritte ausgeführt werden. Eines oder mehrere der Mittel können auch durch die gleiche Einheit ausgeführt und/oder gesteuert werden. Beispielsweise können eines oder mehrere der Mittel durch einen oder mehrere Prozessoren gebildet sein.
- Eine Vorrichtung, die zumindest einen Prozessor und zumindest einen Speicher, der Programmcode beinhaltet, umfasst, wobei der Speicher und der Programmcode eingerichtet sind, eine Vorrichtung mit dem zumindest einen Prozessor dazu zu veranlassen, zumindest das Verfahren gemäß dem jeweiligen Aspekt der Erfindung auszuführen und/oder zu steuern. Dabei können entweder alle Schritte des Verfahrens gesteuert werden, oder alle Schritte des Verfahrens ausgeführt werden, oder einer oder mehrere Schritte gesteuert und einer oder mehrere Schritte ausgeführt werden.

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren, zu entnehmen. Die der Anmeldung beiliegenden Figuren sollen jedoch nur dem Zwecke der Verdeutlichung, nicht aber zur Bestimmung des Schutzbereiches der Erfindung dienen. Die beiliegenden Zeichnungen sind nicht notwendigerweise maßstabsgetreu und sollen lediglich das allgemeine Konzept der Erfindung beispielhaft widerspiegeln. Insbesondere sollen Merkmale, die in den Figuren enthalten sind, keineswegs als notwendiger Bestandteil der vorliegenden Erfindung erachtet werden.

Es zeigen:
- Fig. 1: eine schematische Darstellung einer beispielhaften Ausführungsform eines Systems gemäß dem ersten Aspekt der vorliegenden Erfindung;
- Fig. 2: eine schematische Darstellung einer beispielhaften Ausführungsform eines Systems gemäß der vorliegenden Erfindung;
- Fig. 3: ein Flussdiagramm einer beispielhaften Ausführungsform eines Verfahrens gemäß dem ersten Aspekt der vorliegenden Erfindung;
- Fig. 4: ein Flussdiagramm einer beispielhaften Ausführungsform eines Verfahrens gemäß dem zweiten Aspekt der vorliegenden Erfindung;

### Detaillierte Beschreibung einiger beispielhafter Ausführungsformen der Erfindung

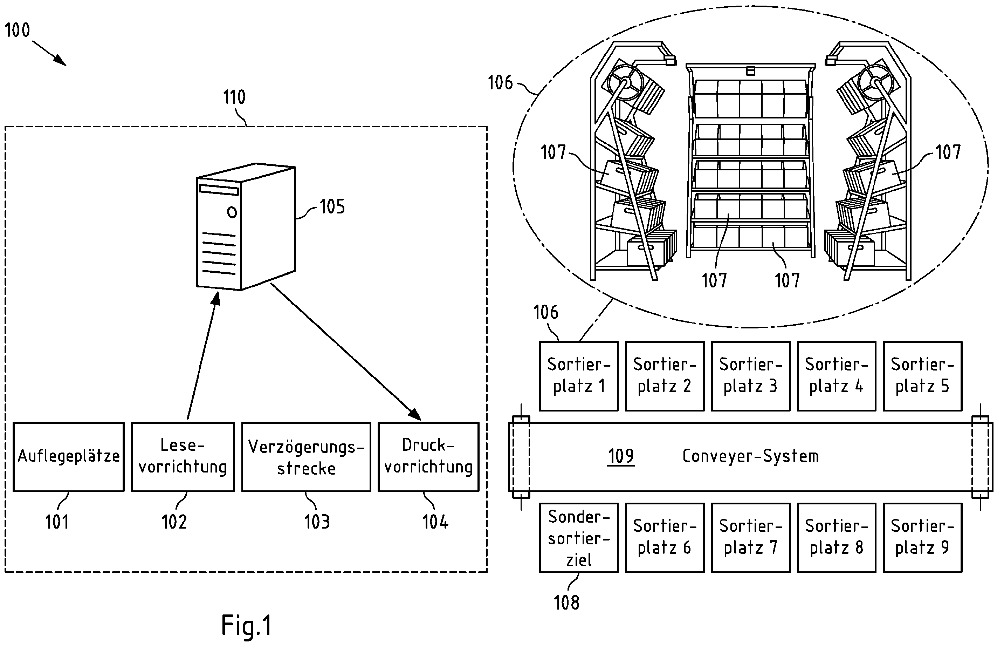

Fig. 1 zeigt schematisch eine Sortieranlage 100, mit der ein beispielhaftes Verfahren gemäß dem ersten Aspekt der vorliegenden Erfindung zur Sortierung einer Anzahl von Sendungen ausgeführt werden kann.

In einer oder mehreren Vorrichtungen, beispielsweise der Erfassungseinheit 110 bestehend aus mehreren Vorrichtungen, wird für jede der Sendungen aus der Anzahl von Sendungen ein jeweiliges Sortierziel aus einer Anzahl von Sortierzielen bestimmt Dies kann beispielsweise zumindest auf der jeweiligen Zieladresse der Sendungen basieren. Dazu wird in beispielhaften Ausführungsformen der Erfindung für jede der Sendungen aus der Anzahl von Sendungen eine jeweilige Zieladresse bestimmt

Ein Sortierziel ist beispielsweise ein bestimmter Behälter 107 in einem bestimmten Sortierplatz 106. Die Sortieranlage 100 enthält beispielsweise zehn Sortierplätze 106, die jeweils beispielsweise eine bestimmte Anzahl von Behältern 107 enthalten. Ein Sortierziel kann dann beispielsweise durch die Zuweisung eines Sortierplatzes 106 und der Zuweisung eines Behälters 107 innerhalb des Sortierplatzes 106, also beispielsweise Sortierplatz 1, Behälter 10 oder Sortierplatz 2, Behälter 10, bestimmt sein. Alternativ können beispielsweise die Behälter 107 über alle Sortierplätze 106 der Sortieranlage 100 fortlaufend identifizierbar, beispielsweise fortlaufend nummeriert sein.

In beispielhaften Ausführungsformen der Erfindung können jedem Sortierziel aus der Anzahl von Sortierzielen eine oder mehrere Zustelltouren zugeordnet sein. Das Bestimmen des Sortierziels kann dann auf einem Bestimmen der Zustelltour, die die jeweilige Zieladresse enthält, basieren. Dabei entspricht eine Zustelltour einer Menge von Zieladressen, die vorzugsweise alle von derselben Zustellentität bedient werden. Eine Zustellentität kann ein Mensch, beispielsweise ein (insbesondere beim Zustellunternehmen angestellter) Zusteller, oder eine Vorrichtung sein, z.B. ein Fahrzeug, ein Roboter oder eine Drohne sein, um nur ein paar Beispiele zu nennen.

Vorteilhafterweise ist in manchen dieser beispielhaften Ausführungsformen jedem Sortierziel aus der Anzahl von Sortierzielen genau eine Zustelltour zugeordnet Ist beispielsweise ein Behälter 107 genau einer Zustelltour einer Zustellentität zugeordnet, kann der Behälter 107 der Zustellentität übergeben und von dieser auf ihrer Zustelltour zum Transport der Sendungen genutzt werden, ohne dass die Sendungen in dem Behälter erneut bearbeitet werden müssen. Vorteilhafterweise ist in beispielhaften Ausführungsformen einer Zustelltour genau ein Sortierziel zugeordnet, sodass durch die Bestimmung der Zustellroute das Sortierziel bestimmt ist Reichen beispielsweise die Kapazitäten des Behälters 107, der genau einer Zustelltour zugeordnet ist, nicht für alle Sendungen auf dieser Zustelltour aus, kann es beispielsweise notwendig sein, dass mehrere Behälter 107 derselben Zustelltour zugeordnet sind und die Bestimmung des Sortierziels zusätzlich auf weiteren Kriterien basiert, wie beispielsweise die Lage der Zieladresse innerhalb der Gangfolge (Gangfolgenummer), wobei die Gangfolge die Abfolge aller in einer Zustelltour enthaltenen Zieladressen beschreibt, bei der diese nach der Reihenfolge, mit der die Zustellentität diese Zieladressen bedient, geordnet sind.

Die Erfassungseinheit 110 umfasst in der dargestellten beispielhaften Ausführungsform einen oder mehrere Auflegeplätze 101, eine Lesevorrichtung 102, eine Verzögerungsstrecke 103, eine Druckvorrichtung 104 und eine Datenverarbeitungseinheit 105.

Der Lesevorrichtung 102 werden, vorzugsweise sukzessiv, einzelne Sendungen zugeführt Dazu sind in der dargestellten beispielhaften Aufführungsform vor der Lesevorrichtung 102 ein oder mehrere Auflegeplätze 101 vorhanden, auf denen die Sendungen manuell und/oder automatisch in die Sortieranlage 100 gegeben werden. Die Lesevorrichtung 102 ermittelt für jede Sendung Daten, mit denen in der Datenverarbeitungseinheit 105 die für die Bestimmung des Sortierziels notwendigen Informationen ermittelt werden, und übermittelt diese an die Datenverarbeitungseinheit 105. Die benötigten Informationen sind beispielsweise Adressinformationen, welche beispielsweise durch Optical Character Recognition (OCR) erfasst werden können, bei der beispielsweise durch einen Videoscanner der Lesevorrichtung 102 Abbildungen der Sendung aufgenommen werden, die anschließend beispielsweise auf Grundlage einer Adress-Datenbank ausgewertet werden. Alternativ oder zusätzlich kann die Sendung bereits mit einer eindeutigen Sendungsidentifikation versehen worden sein, beispielsweise bei der Abgabe der Sendung oder bei der Bearbeitung in einem anderen Verteilzentrum vor dem Transport in das Verteilzentrum, in dem sich die Sortieranlage 100 befindet. Beispielsweise handelt es sich bei der Sendungsidentifikation um einen Barcode, einen Datamatrix Code (DMC), einen Quick Response (QR) Code, Informationen in Klarschrift oder Radio-Frequency Identification (RFID)-Transponder, um nur einige Beispiele zu nennen. Diese Sendungsidentifikation kann mit der Lesevorrichtung 102, beispielsweise mit einem Scanner oder einer RFID-Leseeinrichtung, ausgelesen werden und in der Datenverarbeitungseinheit 105 durch einen Abgleich mit den im System hinterlegten Daten mit den benötigten Informationen verknüpft werden. Für die Bearbeitung von Sendungen mit und ohne Sendungsidentifikation ist die Lesevorrichtung 102 vorzugsweise eingerichtet, mehrere verschiedene Verfahren zur Erfassung der Daten auszuführen.

Anschließend wird die Sendung in der dargestellten, beispielhaften Ausführungsform der Erfindung in einer Verzögerungsstrecke 103 transportiert, während die Datenverarbeitungseinheit 105 anhand der mit Hilfe der Lesevorrichtung 102 gewonnenen Informationen das Sortierziel für die Sendung bestimmt Beispielsweise wird anhand der gewonnenen Zieladresse die zugehörige Zustelltour ermittelt, in der die Zieladresse enthalten ist Jeder Zustelltour ist dann beispielsweise genau ein Sortierziel zugeordnet. Die Anzahl der Zustelltouren und/oder Sortierziele, die Zuordnung von Adressen zu Zustelltouren bzw. Sortierzielen und/oder die Gangfolge können für einen bestimmten Zeitraum festgelegt sein, sie können aber beispielsweise auch täglich bzw. für jeden Sortiervorgang neu festgelegt werden, beispielsweise aufgrund von sich ändernden Dienstplänen oder Sendungsmengen.

Nach der Bestimmung des Sortierziels wird, beispielsweise in der Datenverarbeitungseinheit 105, jeder der Sendungen aus der Anzahl von Sendungen eine jeweilige sortierzielspezifische Eingangsnummer zugewiesen. Eine Eingangsnummer ist sortierzielspezifisch, wenn die Eingangsnummer für alle Sendungen eines Sortierziels jeweils einzigartig ist (z.B. zumindest innerhalb eines vordefinierten Zeitraums, beispielsweise innerhalb eines Tages, oder bezogen auf einen Sortierlauf), sodass für jedes Sortierziel jede bestimmte Eingangsnummer eindeutig einer Sendung aus allen für das jeweilige Sortierziel bestimmten Sendungen (z.B. innerhalb des vordefinierten Zeitraums bzw. für diesen Sortierlauf) zugeordnet werden kann.

In beispielhaften Ausführungsformen der Erfindung entspricht die jeweilige Eingangsnummer einer Sendung einer Anzahl von Sendungen, für die beim Zuweisen der Eingangsnummer ebenfalls das für diese Sendung bestimmte Sortierziel bestimmt worden ist, oder steht mit dieser Anzahl in Beziehung. Ist die Sendung beispielsweise die erste Sendung, die für ihr Sortierziel erfasst wurde (z.B. innerhalb des vordefinierten Zeitraums oder für einen Sortierlauf), wird ihr die Eingangsnummer 1 zugeordnet Sind bereits zuvor (z.B. innerhalb des vordefinierten Zeitraums oder in diesem Sortierlauf) drei Sendungen für dasselbe Sortierziel erfasst worden, die Sendung ist also die vierte für das Sortierziel erfasste Sendung, wird der Sendung die Eingangsnummer 4 zugeordnet

In beispielhaften Ausführungsformen der Erfindung wird die Sendung mit einer Information assoziiert, wobei basierend auf der Information zumindest die Eingangsnummer der Sendung ermittelbar ist. Beispielsweise handelt es sich bei der Information um einen Barcode, einen Datamatrix Code (DMC), einen QR Code, Informationen in Klarschrift oder Daten in einem RFID-Transponder, um nur einige Beispiele zu nennen. In beispielhaften Ausführungsformen erfolgt das Assoziieren der Sendung mit der Information vorzugsweise durch Anbringen eines Etiketts. In diesen beispielhaften Ausführungsformen umfasst das Verfahren ferner das Erstellen eines Etiketts für die jeweilige Sendung. Dafür umfasst die Erfassungseinheit 110 beispielsweise zusätzlich eine Druckvorrichtung 104. In alternativen Ausführungsformen kann die Information beispielsweise direkt auf die Sendung gedruckt werden oder in einen RFID-Transponder gespeichert werden.

In beispielhaften Ausführungsformen werden die Sendungen im Falle einer erfolgreichen Bestimmung des Sortierziels zu ihrem jeweiligen Sortierziel befördert. Dies geschieht beispielsweise manuell und/oder automatisiert. In der dargestellten beispielhaften Ausführungsform der Erfindung wird die Sendung zunächst automatisiert über ein Conveyer-System 109 zu einem Sortierplatz 106 transportiert. Dort wird die Sendung von einer Sortierentität, beispielsweise einer Person (manuell) oder einer Vorrichtung (automatisch), in den Behälter 107 sortiert, der dem für die Sendung bestimmten Sortierziel entspricht.

In beispielhaften Ausführungsformen der Erfindung sind basierend auf der mit der Sendung assoziierten Information weitere Informationen der Sendung ermittelbar. Diese können beispielsweise für den Transport der Sendung zum Sortierziel genutzt werden. In beispielhaften Ausführungsformen ist zumindest ein Teil der assoziierten Information maschinenlesbar, beispielsweise durch einen QR-Code, einen DMC oder einen Barcode. In manchen dieser beispielhaften Ausführungsformen basiert die Beförderung der Sendung zu dem jeweiligen bestimmten Sortierziel zumindest auf dem maschinenlesbaren Teil der Information. Beispielsweise kann der Sortierplatz 106, an dem sich das Sortierziel befindet, auf der Sendung maschinenlesbar codiert sein und von dem Conveyer-System 109 für die Beförderung, beispielsweise durch einen oder mehrere Scanner ausgelesen werden. Alternativ oder zusätzlich ist in manchen der beispielhaften Ausführungsformen der Erfindung zumindest ein Teil der assoziierten Information menschenlesbar. In manchen dieser beispielhaften Ausführungsformen erfolgt die Beförderung der Sendung zu dem jeweiligen bestimmten Sortierziel in das jeweilige Sortierziel zumindest teilweise manuell und basiert zumindest auf dem menschenlesbaren Teil der Information. Beispielsweise kann aus der Information ermittelt werden, wo sich das Sortierziel, der Behälter 107, innerhalb des Sortierplatzes 106 befindet, beispielsweise durch eine Buchstaben-Ziffern-Kombination, die die horizontale und vertikale Position des Behälters 107 innerhalb des Sortierplatzes 106 angibt Dadurch ist es nicht notwendig, dass die für die Einordnung in die Behälter 107 zuständige Sortierperson die einzelnen Zustelltouren und die Zuordnung der Behälter 107 zu den Zustelltouren kennt, und es ist flexibel möglich, die Sortierpersonen an verschiedenen Sortierplätzen 106 einzusetzen, ohne dass diese dafür besonders geschult werden müssen.

Neben der Angabe des Sortierziels und der Eingangsnummer können basierend auf der mit einer Sendung assoziierten Information beispielsweise Informationen zu der Zieladresse, der Zustelltour oder eine Information über die Gangfolgenummer ermittelt werden.

Falls für eine Sendung kein Sortierziel bestimmt werden kann, wird die Sendung in beispielhaften Ausführungsformen der Erfindung zu einem festgelegten Sondersortierziel 108 transportiert. Dort kann die Sendung beispielsweise manuell bearbeitet werden. Die manuelle Bearbeitung kann beispielsweise eine manuelle Bestimmung des Sortierziels und/oder eine manuelle Assoziierung mit der Eingangsnummer umfassen. In alternativen Ausführungsformen kann die Sendung beispielsweise erneut der Erfassungseinheit 110 zugeführt werden.

An dem für die Sendung bestimmten Sortierziel wird die Sendung basierend auf der ihr zugewiesenen, sortierzielspezifischen Eingangsnummer in das Sortierziel eingeordnet In beispielhaften Ausführungsformen der Erfindung erfolgt das Einordnen der Sendungen zumindest teilweise automatisiert und erfolgt zumindest basierend auf dem menschenlesbaren Teil der Informationen. In beispielhaften Ausführungsformen der Erfindung erfolgt das Einordnen der Sendungen zumindest teilweise manuell und erfolgt zumindest basierend auf dem menschenlesbaren Teil der Informationen. Die Einordnung (z.B. physische Einsortierung) der Sendungen in einem Sortierziel erfolgt beispielsweise nach aufsteigender oder absteigender Eingangsnummer. Entspricht die Eingangsnummer einer Sendung der Anzahl von Sendungen, für die beim Zuweisen der Eingangsnummer ebenfalls das für diese Sendung bestimmte Sortierziel bestimmt worden ist, wie oben für beispielhafte Ausführungsformen beschrieben, kann die Ordnung nach aufsteigenden Eingangsnummern beispielsweise dadurch erreicht werden, dass diese nach Eingangsreihenfolge zum Sortierziel transportiert und eine Sendung dort manuell oder automatisiert auf die bereits vorhandenen Sendungen platziert wird.

Die Verfahren gemäß der vorliegenden Erfindung umfassen für eine Anzahl von Sendungen das Bestimmen einer Zustellreihenfolge und eine Bestimmung oder Ausgabe der Abfolge der diesen Sendungen zugewiesenen Eingangsnummern, die entsprechend der Zustellreihenfolge sortiert sind.

In einer ersten Alternative sind diese Schritte Teil des Verfahrens gemäß dem ersten Aspekt der Erfindung. Dafür umfasst das Verfahren gemäß dem ersten Aspekt der Erfindung, für zumindest das eine Sortierziel der Anzahl von Sortierzielen, das Bestimmen einer Zustellreihenfolge für die in das Sortierziel eingeordneten Sendungen basierend auf einer Sendungsinformation und das Ausgeben der entsprechend der Zustellreihenfolge der in das Sortierziel eingeordneten Sendungen sortierten Abfolge der diesen Sendungen zugewiesenen Eingangsnummern.

Korrespondierend umfasst das Verfahren gemäß dem zweiten Aspekt der Erfindung in der ersten Alternative ein Erhalten einer sortierten Abfolge von Eingangsnummern, wobei eine Eingangsnummer jeweils einer Sendung aus einer Anzahl von Sendungen zugeordnet ist, und wobei die Abfolge der Eingangsnummern entsprechend einer Zustellreihenfolge der zugeordneten Sendungen sortiert ist

Die Bestimmung der Zustellreihenfolge kann beispielsweise in einem externen Server erfolgen, der beispielsweise zentral für mehrere Verteilzentren oder lokal für einzelne örtliche Sendungsverteilstandorte, wie z.B. Zustellstützpunkte oder Depots, zur Verfügung steht Alternativ kann das Bestimmen der Zustellreihenfolge beispielsweise in der Datenverarbeitungseinheit 105 erfolgen. Die Ausgabe der Abfolge der Eingangsnummern gemäß dem ersten Aspekt der Erfindung kann beispielsweise analog, z.B. durch eine ausgedruckte Liste oder einen Barcode erfolgen, der beispielsweise zusammen mit dem Behälter 106 und den darin enthaltenen Sendungen an die Zustellentität übermittelt wird. In beispielhaften Ausführungsformen der Erfindung wird die Abfolge an ein mobiles Gerät, beispielsweise ein Mobiltelefon oder ein portables Gerät der Zustellentität (einen sog. Handscanner), ausgegeben. Dies erfolgt beispielsweise durch eine Datenübertragung über eine Datenkommunikationsverbindung und kann beispielsweise auch durch eine Weiterleitung über weitere Vorrichtungen erfolgen. Die Datenkommunikation mit dem mobilen Gerät basiert beispielsweise auf dem Internet Protocol (IP), wobei das mobile Gerät beispielsweise über eine drahtlose Funkverbindung, beispielsweise eine zellulare Mobilfunkverbindung oder ein Wireless Local Area Network (WLAN), auf das Internet zugreift Alternativ kann beispielsweise der Barcode durch das mobile Gerät gescannt und die Eingangsnummernabfolge so durch das Gerät erfasst werden.

In einer zweiten Alternative sind die oben beschriebenen Schritte zur Bestimmung der Zustellreihenfolge und Abfolge der Eingangsnummern Teil des Verfahrens gemäß dem zweiten Aspekt der Erfindung. Dafür umfasst das Verfahren gemäß dem ersten Aspekt der Erfindung ein Ausgeben, für zumindest ein Sortierziel der Anzahl von Sortierzielen, zu jeder derjenigen Sendungen, für die das Sortierziel bestimmt wurde, der jeweiligen, zugewiesenen Eingangsnummer und einer jeweiligen Sendungsinformation, wobei basierend auf den Sendungsinformationen der Sendungen einer Zustellreihenfolge für diese Sendungen bestimmt werden kann. Korrespondierend umfasst das Verfahren gemäß dem zweiten Aspekt der Erfindung ein Erhalten, für jede Sendung aus einer Anzahl von Sendungen, einer jeweiligen, der Sendung zugewiesenen Eingangsnummer und einer jeweiligen Sendungsinformation, wobei basierend auf den Sendungsinformationen eine Zustellreihenfolge für diese Sendungen bestimmt werden kann, sowie das Bestimmen der Zustellreihenfolge für die Sendungen, zumindest basierend auf den Sendungsinformationen, und das Bestimmen der entsprechend der Zustellreihenfolge der Sendungen sortierten Abfolge der diesen Sendungen zugewiesenen Eingangsnummern. Die Übermittlung der Sendungsinformationen und Eingangsnummern kann dabei beispielsweise in gleicher Weise wie die Übermittlung der Abfolge der Eingangsnummern erfolgen.

Die Ausgabe der zugewiesenen Eingangsnummer und einer jeweiligen Sendungsinformation gemäß dem ersten Aspekt der Erfindung kann beispielsweise analog, z.B. durch eine ausgedruckte Liste oder einen Barcode erfolgen, der beispielsweise zusammen mit dem Behälter 106 und den darin enthaltenen Sendungen, an die Zustellentität übermittelt (z.B. dorthin transportiert) wird. Alternativ kann die Ausgabe digital erfolgen, beispielsweise über eine Datenkommunikationsverbindung an einen externen Server. In beispielhaften Ausführungsformen der Erfindung erfolgt die Ausgabe an ein mobiles Gerät, beispielsweise ein Mobiltelefon oder ein portables Gerät der Zustellentität (einen sog. Handscanner). Dies erfolgt beispielsweise durch eine Datenübertragung über eine Datenkommunikationsverbindung, z.B. zwischen der Datenverarbeitungseinheit 105 und dem mobilen Gerät, und kann beispielsweise auch durch eine Weiterleitung über weitere Vorrichtungen erfolgen. Die Datenkommunikation mit dem mobilen Gerät basiert beispielsweise auf dem Internet Protocol (IP), wobei das mobile Gerät beispielsweise über eine drahtlose Funkverbindung, beispielsweise eine zellulare Mobilfunkverbindung oder ein Wireless Local Area Network (WLAN), auf das Internet zugreift Alternativ kann beispielsweise der Barcode durch das mobile Gerät gescannt und die Eingangsnummernabfolge so durch das Gerät erfasst werden.

Die Bestimmung der Zustellreihenfolge und der Abfolge der Eingangsnummern kann beispielsweise durch das mobile Gerät oder durch einen externen Server (mit dem das mobile Gerät beispielsweise diesbezüglich kommuniziert) erfolgen, der beispielsweise für den jeweiligen örtlichen Sendungsverteilstandort (z.B. Zustellstützpunkt oder Depot) zur Verfügung steht. Die Sendungsinformation kann beispielsweise die Zieladressen der Sendungen enthalten, auf deren Grundlage mit Kenntnis der Gangfolge der Zustelltour die Zustellreihenfolge der Sendungen und einhergehend damit die Abfolge der Eingangsnummern bestimmt werden kann. Die Gangfolge der Zustelltour ist beispielsweise in dem Server oder dem mobilen Gerät zu einem früheren Zeitpunkt gespeichert worden oder für die Bestimmung an diese übertragen. Alternativ kann die Bestimmung beispielsweise auch durch die Zustellentität selbst erfolgen.

In beispielhaften Ausführungsformen der Erfindung enthält die Sendungsinformation zumindest die jeweilige Zieladresse der Sendung und die Bestimmung der Zustellreihenfolge der Sendungen basiert zumindest auf der Gangfolge der Zustelltouren, die die Zieladressen umfassen.

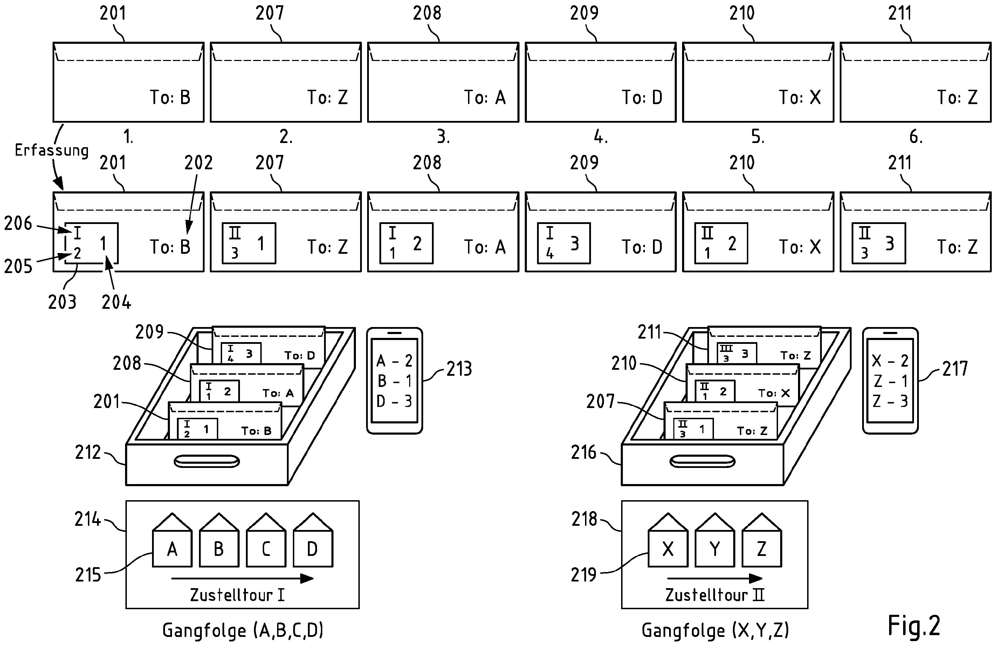

Fig. 2 zeigt eine schematische Darstellung einer beispielhaften Ausführungsform des Verfahrens für sechs in das Verteilzentrum eingehende Sendungen, die zwei verschiedenen Zustelltouren 214 und 218 zugeordnet sind. Die Eingangsnummer einer Sendung entspricht in der dargestellten beispielhaften Ausführungsform der Anzahl der Sendungen, für die bei Zuweisen der Eingangsnummer bereits auch das für diese Sendung bestimmte Sortierziel bestimmt worden ist.

Zustelltour I 214 enthält vier Adressen 215 "A", "B", "C" und "D", wobei die Zustellentität auf ihrer Zustelltour zunächst Adresse "A" bedient, anschließend "B", danach "C" und abschließend "D". Daraus ergibt sich für Zustelltour I 214 die Gangfolge (A, B, C, D). Zustelltour II 218 enthält drei Adressen 219 "X", "Y", "Z" mit der Gangfolge (X, Y, Z). Jeder Zustelltour I, II ist im Verteilzentrum genau ein Behälter 212, 216 als Sortierziel zugeordnet.

Im Verteilzentrum wird als erste Sendung die Sendung 201 mit der Zieladresse "B" 202 erfasst Da dies die erste Sendung ist, für die die zugehörige Zustelltour I 214 und damit der Behälter 212 als Sortierziel bestimmt wurde, wird der Sendung 201 die Eingangsnummer 1 zugewiesen. Die Sendung 201 wird mit dieser Eingangsnummer gekennzeichnet, indem ein entsprechendes Etikett 203 erstellt und auf die Sendung 201 aufgebracht wird. Das Etikett 203 kann neben der Eingangsnummer "1" 204 beispielsweise eine Angabe zur zugehörigen Zustelltour "I" 206 und/oder die Gangfolgenummer "2" 205 der Zieladresse enthalten. Die Zieladresse "B" 202 hat die Gangfolgenummer 2, da die Adresse "B" die zweite Adresse ist, die auf der zugehörigen Zustelltour I 214 bedient wird. Anschließend wird die Sendung in das Sortierziel, den Behälter 212, eingeordnet

Die zweite erfasste Sendung 207 besitzt die Zieladresse "Z", die in der Zustelltour II 218 enthalten ist Daher wird für die Sendung als Sortierziel Behälter 216 bestimmt Da für dieses Sortierziel noch keine andere Sendung erfasst wurde, wird auch der zweiten Sendung die Eingangsnummer "1" zugewiesen. Anschließend wird ein entsprechendes Label aufgebracht und die Sendung in das Sortierziel, den Behälter 216, eingeordnet

Die dritte erfasste Sendung 208 besitzt die Zieladresse "A", die in der Zustelltour I 214 enthalten ist. Daher wird für die Sendung Behälter 212 als Sortierziel bestimmt Da für den Behälter 212 bereits die Sendung 201 erfasst wurde, wird der neuen Sendung 208 die Eingangsnummer 2 zugewiesen und ein entsprechendes Label aufgebracht In den Behälter 210 wird die Sendung 208 basierend auf ihrer Eingangsnummer eingeordnet. In der dargestellten beispielhaften Ausführungsform werden die Sendungen von mit aufsteigender Eingangsnummer in die Behälter 212, 216 eingeordnet Daher wird die Sendung 208 mit der Eingangsnummer 2 hinter die erste Sendung 201 mit der Eingangsnummer 1 eingeordnet.

Entsprechend wird auch mit den darauffolgend erfassten Sendungen 209, 210 und 211 verfahren, sodass sich nach Einordnung aller Sendungen von vorne nach hinten bzw. perspektivisch von unten nach oben betrachtet die Sendungen 201, 208 und 209 in Behälter 212 befinden, deren Zieladressen in der Zustelltour I 214 enthalten sind, und die Sendungen 207, 210 und 211 in Behälter 216, deren Zieladressen in der Zustelltour II 218 enthalten sind.

Für die Bestimmung der Zustellreihenfolge wird beispielsweise jeweils die Gangfolge der jeweiligen Zustelltour genutzt Für die drei Sendungen 201, 208 und 209 in Behälter 212 wird zunächst die Sendung 208 mit der Zieladresse "A" zugestellt, anschließend die Sendung 201 mit der Zieladresse "B" und anschließend die Sendung 209 mit der Zieladresse "D". Daraus ergibt sich die Abfolge 213 (2, 1, 3) der Eingangsnummern. Für die drei Sendungen 207, 210 und 211 in Behälter 216 wird zunächst die Sendung 210 mit der Zieladresse "X" zugestellt, anschließend die beiden Sendungen 207 und 211 mit der Zieladresse "Z". Daraus ergibt sich die Abfolge 217 (2, 1, 3) oder (2,3,1) der Eingangsnummern, aus denen beliebig eine Abfolge gewählt werden kann, da die beiden Sendungen mit Zieladresse "Z" gleichzeitig zugestellt werden.

Gemäß dem zweiten Aspekt der Erfindung wird, beispielsweise durch die Zustellentität der Zustelltour I oder ein mobiles Gerät der Zustellentität, die sortierte Abfolge von Eingangsnummern 213 erhalten oder bestimmt, wobei eine Eingangsnummer jeweils einer Sendung aus einer Anzahl von Sendungen zugewiesen ist, und wobei die Abfolge der Eingangsnummern entsprechend einer Zustellreihenfolge der zugeordneten Sendungen sortiert ist Die Eingangsnummern werden in der sortierten Abfolge 213 durch die Zustellentität erfasst oder an die Zustellentität ausgegeben. Dabei ist die Anzahl von Sendungen (z.B. in dem Behälter 212) nach den Eingangsnummern sortiert und die Zustellentität kann basierend auf einer Eingangsnummer die der Eingangsnummer zugeordnete Sendung innerhalb der Anzahl von Sendungen (z.B. in dem Behälter 212) auffinden. Wird die Abfolge beispielsweise von einem mobilen Gerät erhalten oder bestimmt und die Eingangsnummern von dem mobilen Gerät an die Zustellentität ausgegeben, wird dazu auf dem mobilen Gerät beispielsweise eine App, also ein komplexes Programm, ausgeführt, die z.B. zu einem früheren Zeitpunkt auf das mobile Gerät installiert wurde.

Sobald die Zustellentität im örtlichen Sendungsverteilstandort den Behälter 212 mit den Sendungen 201, 208 und 209 erhält, kann die Zustellentität mit der Zustelltour I 214 starten, da die Sendungen im örtlichen Sendungsverteilstandort nicht mehr weiterbearbeitet werden müssen. Während der Zustellung reicht es aus, dass die Zustellentität weiß, welche Sendung als Nächstes zugestellt werden muss. Dazu wird der Zustellentität ausgegeben, oder die Zustellentität erfasst in der Abfolge der Eingangsnummern 213, die nächste Sendung, die noch nicht zugestellt wurde. Da die Sendungen, insbesondere basierend auf den Eingangsnummern, in dem Behälter 212 sortiert sind, kann die Zustellentität anhand der Eingangsnummer die Lage der Sendungen in dem Behälter 212 abschätzen und die Sendungen auffinden. Zu Beginn seiner Zustelltour erfasst die Zustellentität anhand der Abfolge der Eingangsnummern 213, dass die erste zuzustellende Sendung die Eingangsnummer 2 hat Da insgesamt drei Sendungen in dem Behälter 212 sind, kann die Zustellentität abschätzen, dass sich die Sendung mit der Eingangsnummer 2 in der Mitte des Behälters befinden wird. Nach der Zustellung der Sendung 208 mit der Eingangsnummer 2, erfasst die Zustellentität, dass die nächste zuzustellende Sendung die Eingangsnummer 1 hat, sich also im vorliegenden Fall der aufsteigend sortierten Sendungen ganz vorne im Behälter befindet. Durch die Möglichkeit, die Lage der zuzustellenden Sendung im Behälter 212 abzuschätzen, reduziert sich die Zustellzeit einer Sendung im Vergleich zu einem unsortierten Behälter. In beispielhaften Ausführungsformen der Erfindung, bei denen die Sendungen mit einer Information assoziiert sind, basierend auf der die Eingangsnummer ermittelbar ist, kann die Zustellentität die Sendungen anhand der Eingangsnummer identifizieren ohne weitere Informationen, wie beispielsweise die Zieladresse oder den Adressaten erfassen zu müssen, sodass die Zustellzeit einer Sendung weiter reduziert wird.

In beispielhaften Ausführungsformen der vorliegenden Erfindung werden für zumindest einen Teil der Anzahl von Sendungen zusammen mit der Eingangsnummer sendungsbezogene Informationen erhalten und anschließend zusammen mit den Eingangsnummern erfasst oder ausgegeben. Beispielsweise wird zu jeder Eingangsnummer die zugehörige Zieladresse erfasst oder ausgegeben, sodass die Zustellentität weiß, an welcher Adresse die nächste Sendung zuzustellen ist, bevor sie die Sendung aus dem Behälter nimmt. Durch Erhalten der zu den Eingangsnummern zugeordneten Zieladressen kann die Abfolge der Eingangsnummern mit anderen Abfolgen von Sendungen, die auch anhand der Zieladresse identifiziert werden können, zu einer Liste vereinigt werden. Beispielsweise hat die Zustellentität zusätzlich eine Abfolge mit zuzustellenden Paketen oder Sendungen, die eine Sonderbehandlung benötigen, beispielsweise ein Einschreiben, bei dem eine Unterschrift benötigt wird oder eine Nachnahme, bei der ein Zahlungsvorgang notwendig ist Durch die Vereinigung der Listen vereinfacht sich der Zustellprozess der Zustellentität für die Gesamtheit seiner Sendungen, da die Zustellentität nicht gleichzeitig verschiedene Listen bzw. Informationsquellen beachten muss.

In beispielhaften Ausführungsformen der vorliegenden Erfindung wird jeweils nur ein Teil der Eingangsnummern aller in der sortierten Abfolge von Eingangsnummern enthaltenen Eingangsnummern ausgegeben. Dazu wird ferner bestimmt, welcher Teil der Eingangsnummern aller in der Eingangsnummernfolge enthaltenen Eingangsnummern ausgegeben wird. Beispielsweise werden auf dem mobilen Gerät der Zustellentität lediglich eine bestimmte Anzahl der nächsten Eingangsnummern ausgegeben, beispielsweise jeweils nur die Eingangsnummer der als Nächstes zuzustellenden Sendung, um die Übersichtlichkeit zu steigern. In manchen dieser beispielhaften Ausführungsformen basiert das Bestimmen, welcher Teil der Eingangsnummern ausgegeben wird, auf den Zieladressen der zugeordneten Sendungen und der aktuellen Position der Zustellentität Beispielsweise werden nur die Eingangsnummern angezeigt, die auf der Zustelltour der Zustellentität innerhalb einer festgelegten Distanz zu ihrer aktuellen Position liegen. Die Position der Zustellentität kann beispielsweise durch einen Global Positioning System (GPS) Empfänger im mobilen Gerät bestimmt werden und dort zusammen mit den Informationen über die Zustelltour verarbeitet werden.

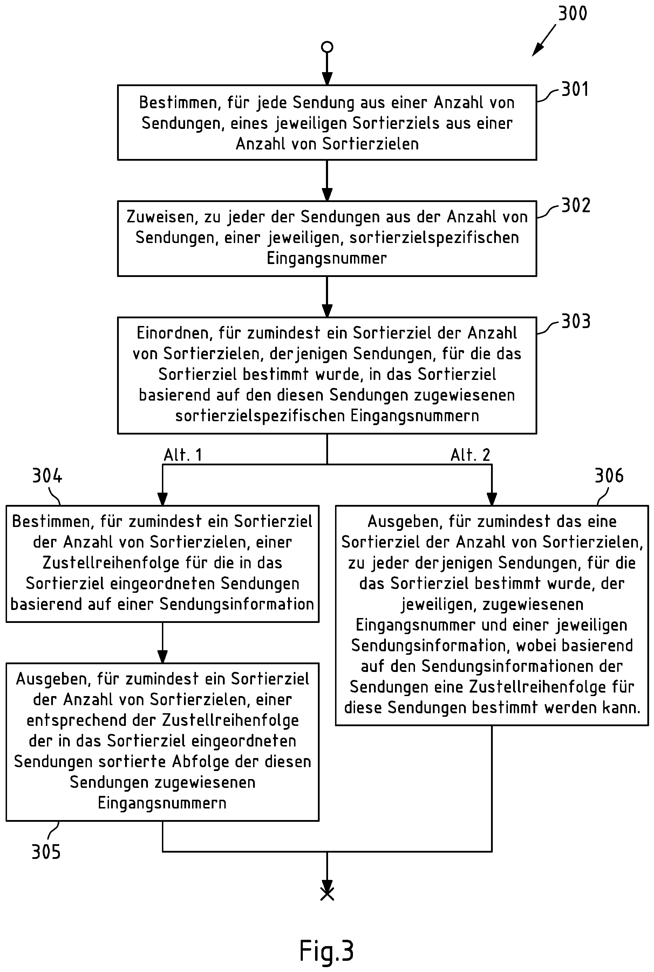

Fig. 3 zeigt ein Flussdiagramm 300 einer beispielhaften Ausführungsform eines Verfahrens gemäß dem ersten Aspekt der vorliegenden Erfindung, beispielsweise ausgeführt und/oder gesteuert von einer Sortieranlage 100 für die Sortierung einer Anzahl von Sendungen. Diese beispielhafte Ausführungsform des Verfahrens ist eine verallgemeinerte Fassung der bereits anhand von Fig. 1 und Fig. 2 beschriebenen Ausführungsbeispiele gemäß dem ersten Aspekt der vorliegenden Erfindung und kann mit einem oder mehreren oder allen der in diesen Ausführungsbeispiele beschriebenen Merkmale kombiniert werden.

In Schritt 301 wird für jede Sendung aus einer Anzahl von Sendungen ein jeweiliges Sortierziel aus einer Anzahl von Sortierzielen bestimmt In Schritt 302 wird jeder der Sendungen aus der Anzahl der Sendungen eine jeweilige, sortierzielspezifische Eingangsnummer zugewiesen. Die Eingangsnummer einer Sendung ist sortierzielspezifisch, falls für das Sortierziel dieser Sendung keiner anderen Sendung dieselbe Eingangsnummer zugewiesen ist. Einer sortierzielspezifischen Eingangsnummer kann also eindeutig eine Sendung aus allen für das jeweilige Sortierziel bestimmten Sendungen zugeordnet werden. In Schritt 303 werden, für zumindest ein Sortierziel der Anzahl von Sortierzielen, diejenigen Sendungen, für die das Sortierziel bestimmt wurde, in das Sortierziel basierend auf den diesen Sendungen zugewiesenen, sortierzielspezifischen Eingangsnummern eingeordnet. Die Einordnung einer Sendung kann beispielsweise im Anschluss an das Zuweisen der sortierzielspezifischen Eingangsnummer zu der Sendung erfolgen, ohne dass bereits alle Sendungen für das Sortierziel bestimmt wurden. Beispielsweise wird die Sendung, der zuerst eine sortierzielspezifische Eingangsnummer zugewiesen wurde, auch zuerst in das Sortierziel eingeordnet. Alternativ können beispielsweise erst alle Sendungen für das Sortierziel bestimmt werden und in einem gemeinsamen Schritt in dieses eingeordnet werden. In Schritt 304 wird für zumindest das eine Sortierziel der Anzahl von Sortierzielen eine Zustellreihenfolge für die in das Sortierziel eingeordneten Sendungen basierend auf einer Sendungsinformation bestimmt. In Schritt 305 wird für zumindest das eine Sortierziel der Anzahl von Sortierzielen eine entsprechend der Zustellreihenfolge der in das Sortierziel eingeordneten Sendungen sortierte Abfolge der diesen Sendungen zugewiesenen Eingangsnummern ausgegeben. In dem zu Schritt 304 und 305 alternativen Schritt 306 wird für zumindest das eine Sortierziel der Anzahl von Sortierzielen zu jeder derjenigen Sendungen, für die das Sortierziel bestimmt wurde, die jeweilige, zugewiesene Eingangsnummer und eine jeweilige Sendungsinformation ausgegeben, wobei basierend auf den Sendungsinformationen der Sendungen eine Zustellreihenfolge für diese Sendungen bestimmt werden kann. Die Schritte 304 und 305 bzw. Schritt 306 können/kann vor, während oder nach dem Einordnen der Sendungen in das Sortierziel (Schritt 303) erfolgen.

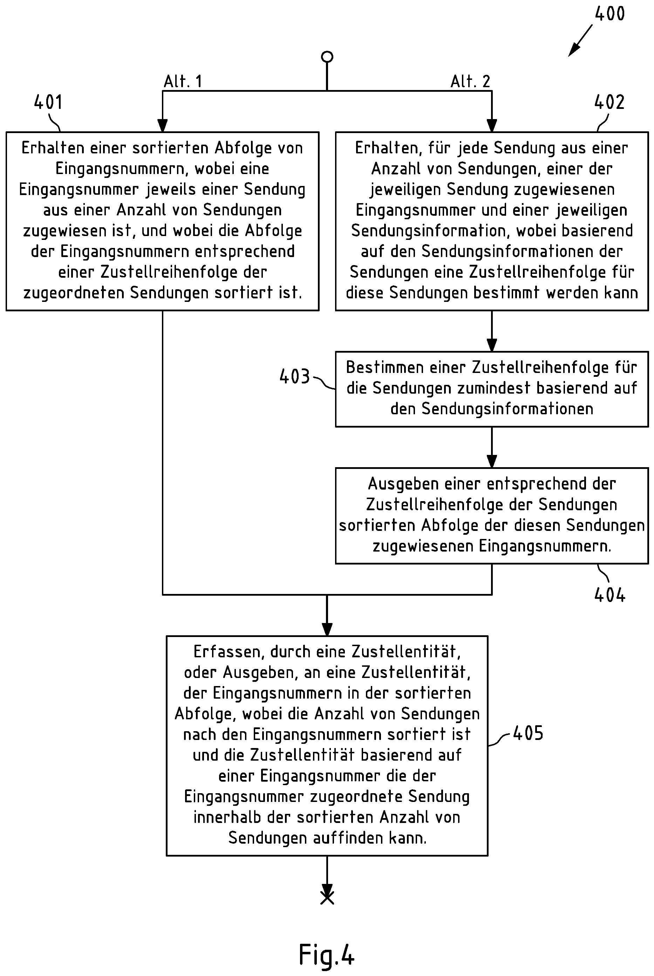

Fig. 4 zeigt ein Flussdiagramm 400 einer beispielhaften Ausführungsform eines Verfahrens gemäß dem zweiten Aspekt der vorliegenden Erfindung, beispielsweise ausgeführt von einer Zustellentität oder einem mobilen Gerät einer Zustellentität. Diese beispielhafte Ausführungsform des Verfahrens ist eine verallgemeinerte Fassung der bereits anhand von Fig. 1 und Fig. 2 beschriebenen Ausführungsbeispiele gemäß dem zweiten Aspekt der vorliegenden Erfindung und kann mit einem oder mehreren oder allen der in diesen Ausführungsbeispiele beschriebenen Merkmale kombiniert werden.

In Schritt 401 wird eine sortierte Abfolge von Eingangsnummern erhalten, wobei eine Eingangsnummer jeweils einer Sendung aus einer Anzahl von Sendungen zugewiesen ist, und wobei die Abfolge der Eingangsnummern entsprechend einer Zustellreihenfolge der zugeordneten Sendungen sortiert ist. Der Erhalt der Abfolge korrespondiert mit der Ausgabe der Abfolge in Schritt 305 des Flussdiagramms 300, jedoch muss die Abfolge in Schritt 401 nicht zwingend von einer Vorrichtung erhalten werden, welche das Verfahren nach Schritt 305 ausführt Genauso muss die Abfolge in Schritt 305 nicht zwingend an eine Vorrichtung, eine Person oder ein System ausgegeben werden, welche/welches das Verfahren nach Schritt 401 ausführt

Die Schritte 402, 403 und 404 sind alternativ zu Schritt 401. In Schritt 402 wird für jede Sendung aus einer Anzahl von Sendungen eine der jeweiligen Sendung zugewiesene Eingangsnummer und eine jeweilige Sendungsinformation erhalten, wobei basierend auf den Sendungsinformationen der Sendungen eine Zustellreihenfolge bestimmt werden kann. Der Erhalt der Eingangsnummern und Sendungsinformationen korrespondiert mit der Ausgabe dieser in Schritt 306 des Flussdiagramms 300, jedoch müssen die Eingangsnummern und Sendungsinformationen in Schritt 402 nicht zwingend von einer Vorrichtung oder einem System erhalten werden, welche/welches das Verfahren nach Schritt 306 ausführt. Genauso müssen die Eingangsnummern und Sendungsinformationen in Schritt 306 nicht zwingend an eine Vorrichtung, eine Person oder ein System ausgegeben werden, welche/welches das Verfahren nach Schritt 402 ausführt. In Schritt 403 wird für die Sendungen eine Zustellreihenfolge, zumindest basierend auf den Sendungsinformationen, bestimmt In Schritt 404 wird eine entsprechend der Zustellreihenfolge der Sendungen sortierte Abfolge der diesen Sendungen zugewiesenen Eingangsnummern bestimmt.

In Schritt 405, der beiden Alternativen gemein ist, werden die Eingangsnummern in der sortierten Abfolge durch eine Zustellentität erfasst oder an eine Zustellentität ausgegeben, wobei die Anzahl von Sendungen nach den Eingangsnummern sortiert ist und die Zustellentität basierend auf einer Eingangsnummer die der Eingangsnummer zugeordnete Sendung innerhalb der Anzahl von Sendungen auffinden kann. Wird die Abfolge der Eingangsnummern beispielsweise von einem mobilen Gerät der Zustellentität in Schritt 401 erhalten oder in Schritt 404 bestimmt, umfasst Schritt 405 die Ausgabe der Eingangsnummern in der sortierten Abfolge an die Zustellentität. Die Ausgabe kann beispielsweise optisch durch einen Bildschirm des mobilen Geräts und/oder akustisch erfolgen. Dabei können alle Eingangsnummern gleichzeitig oder einzeln und/oder in Gruppen ausgegeben werden.

Ein Verfahren gemäß der vorliegenden Erfindung umfasst entweder die Schritte der ersten Alternative oder die Schritte der zweiten Alternative. Ebenso ist eine Vorrichtung oder ein System eine Vorrichtung oder ein System gemäß der vorliegenden Erfindung, wenn sie/es dazu eingerichtet ist oder Mittel umfasst, ein Verfahren mit Schritten nur einer oder beider Alternative auszuführen.

Die in dieser Spezifikation beschriebenen beispielhaften Ausführungsformen / Ausführungsbeispiele der vorliegenden Erfindung sollen auch in allen Kombinationen miteinander offenbart verstanden werden. Insbesondere soll auch die Beschreibung eines von einer Ausführungsform umfassten Merkmals - sofern nicht explizit gegenteilig erklärt - vorliegend nicht so verstanden werden, dass das Merkmal für die Funktion des Ausführungsbeispiels unerlässlich oder wesentlich ist Die Abfolge der in dieser Spezifikation geschilderten Verfahrensschritte in den einzelnen Ablaufdiagrammen ist nicht zwingend, alternative Abfolgen der Verfahrensschritte sind denkbar. Die Verfahrensschritte können auf verschiedene Art und Weise implementiert werden, so ist eine Implementierung in Software (durch Programmanweisungen), Hardware oder eine Kombination von beidem zur Implementierung der Verfahrensschritte denkbar. In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Eine Mehrzahl von Einheiten, Personen oder dergleichen bedeutet im Zusammenhang dieser Spezifikation mehrere Einheiten, Personen oder dergleichen. Die Verwendung des unbestimmten Artikels schließt eine Mehrzahl nicht aus. Eine einzelne Einrichtung kann die Funktionen mehrerer in den Patentansprüchen genannten Einheiten bzw. Einrichtungen ausführen. In den Patentansprüchen angegebene Bezugszeichen sind nicht als Beschränkungen der eingesetzten Mittel und Schritte anzusehen.
Die folgenden beispielhaften Ausführungsformen der Erfindung sollen ebenfalls offenbart gelten:
Ausführungsform 1:
   Verfahren umfassend:
      - Bestimmen, für jede Sendung aus einer Anzahl von Sendungen, eines jeweiligen Sortierziels aus einer Anzahl von Sortierzielen;
      - Zuweisen, zu jeder der Sendungen aus der Anzahl von Sendungen, einer jeweiligen, sortierzielspezifischen Eingangsnummer;
   wobei das Verfahren für zumindest ein Sortierziel der Anzahl von Sortierzielen ferner umfasst:
      o Einordnen derjenigen Sendungen, für die das Sortierziel bestimmt wurde, in das Sortierziel basierend auf den diesen Sendungen zugewiesenen sortierzielspezifischen Eingangsnummern;
         und
         ▪ Bestimmen einer Zustellreihenfolge für die in das Sortierziel eingeordneten Sendungen basierend auf einer Sendungsinformation; und
         ▪ Ausgeben einer entsprechend der Zustellreihenfolge der in das Sortierziel eingeordneten Sendungen sortierten Abfolge der diesen Sendungen zugewiesenen Eingangsnummern;
            oder
         ▪ Ausgeben, zu jeder derjenigen Sendungen, für die das Sortierziel bestimmt wurde, der jeweiligen, zugewiesenen Eingangsnummer und einer jeweiligen Sendungsinformation, wobei basierend auf den Sendungsinformationen der Sendungen eine Zustellreihenfolge für diese Sendungen bestimmt werden kann.
Ausführungsform 2:
   Verfahren nach Ausführungsform 1, wobei die jeweilige Eingangsnummer einer Sendung einer Anzahl von Sendungen entspricht, für die beim Zuweisen der Eingangsnummer ebenfalls das für diese Sendung bestimmte Sortierziel bestimmt worden ist, oder mit dieser Anzahl in Beziehung steht.
Ausführungsform 3:
   Verfahren nach einer der vorherigen Ausführungsformen, ferner umfassend:
   - Befördern der Sendungen zum jeweiligen bestimmten Sortierziel.
Ausführungsform 4:
   Verfahren nach einer der vorherigen Ausführungsformen, ferner umfassend:
   - Bestimmen, für jede der Sendungen aus der Anzahl von Sendungen, einer jeweiligen Zieladresse, wobei das Bestimmen des jeweiligen Sortierziels zumindest auf der jeweiligen Zieladresse basiert.
Ausführungsform 5:
   Verfahren nach Ausführungsform 3, wobei jedem Sortierziel aus der Anzahl von Sortierzielen eine oder mehrere Zustelltouren zugeordnet sind; und wobei das Bestimmen des jeweiligen Sortierziels zumindest auf dem Bestimmen der Zustelltour, die die jeweilige Zieladresse enthält, basiert.
Ausführungsform 6:
   Verfahren nach Ausführungsform 5, wobei jedem Sortierziel aus der Anzahl von Sortierzielen genau eine Zustelltour zugeordnet ist.
Ausführungsform 7:
   Verfahren nach einer der Ausführungsformen 5 oder 6, wobei einer Zustelltour genau ein Sortierziel zugeordnet ist
Ausführungsform 8:
   Verfahren nach einer der vorherigen Ausführungsformen, ferner umfassend:
   - Assoziieren der jeweiligen Sendung mit einer Information, wobei basierend auf der Information zumindest die Eingangsnummer ermittelbar ist
Ausführungsform 9:
   Verfahren nach Ausführungsform 8, wobei das Assoziieren der jeweiligen Sendung mit der Information durch Anbringen eines Etiketts auf die jeweilige Sendung erfolgt, das Verfahren ferner umfassend:
   - Erstellen des Etiketts für die jeweilige Sendung.
Ausführungsform 10:
   Verfahren nach einer der Ausführungsformen 8 oder 9, wobei zumindest ein Teil der Information maschinenlesbar ist.
Ausführungsform 11:
   Verfahren nach Ausführungsform 10, sofern unmittelbar oder mittelbar zurückbezogen auf Ausführungsform 3, wobei die Beförderung der Sendung zu dem jeweiligen bestimmten Sortierziel zumindest auf dem maschinenlesbaren Teil der Information basiert
Ausführungsform 12:
   Verfahren nach einer der Ausführungsformen 10 oder 11, wobei das Einordnen der Sendungen in das jeweilige Sortierziel zumindest teilweise automatisiert erfolgt und zumindest auf dem maschinenlesbaren Teil der Information basiert.
Ausführungsform 13:
   Verfahren nach einer der Ausführungsformen 8 bis 12, wobei zumindest ein Teil der Information menschenlesbar ist.
Ausführungsform 14:
   Verfahren nach Ausführungsform 13, sofern unmittelbar oder mittelbar zurückbezogen auf Ausführungsform 3, wobei die Beförderung der Sendungen zu dem jeweiligen Sortierziel zumindest teilweise manuell erfolgt und zumindest auf dem menschenlesbaren Teil der Information basiert
Ausführungsform 15:
   Verfahren nach einer der Ausführungsformen 13 oder 14, wobei das Einordnen der Sendungen in das jeweilige Sortierziel zumindest teilweise manuell erfolgt und zumindest auf dem menschenlesbaren Teil der Information basiert
Ausführungsform 16:
   Verfahren nach einer der vorherigen Ausführungsformen, wobei das Ausgeben an ein mobiles Gerät erfolgt
Ausführungsform 17:
   Verfahren nach einer der vorherigen Ausführungsformen, wobei die Sendungsinformation zumindest die jeweilige Zieladresse der Sendung enthält, und wobei die Bestimmung der Zustellreihenfolge zumindest auf der Gangfolge der Zustelltouren basiert, die die Zieladressen umfassen.
Ausführungsform 18:
   Verfahren umfassend:
   o Erhalten einer sortierten Abfolge von Eingangsnummern, wobei eine Eingangsnummer jeweils einer Sendung aus einer Anzahl von Sendungen zugewiesen ist, und wobei die Abfolge der Eingangsnummern entsprechend einer Zustellreihenfolge der zugeordneten Sendungen sortiert ist;
      oder
   o Erhalten, für jede Sendung aus einer Anzahl von Sendungen, einer der jeweiligen Sendung zugewiesenen Eingangsnummer und einer jeweiligen Sendungsinformation, wobei basierend auf den Sendungsinformationen der Sendungen eine Zustellreihenfolge für diese Sendungen bestimmt werden kann; und
   o Bestimmen einer Zustellreihenfolge für die Sendungen zumindest basierend auf den Sendungsinformationen; und
   o Bestimmen einer entsprechend der Zustellreihenfolge der Sendungen sortierten Abfolge der diesen Sendungen zugewiesenen Eingangsnummern;
   und
   - Erfassen, durch eine Zustellentität, oder Ausgeben, an eine Zustellentität, der Eingangsnummern in der sortierten Abfolge, wobei die Anzahl von Sendungen nach den Eingangsnummern sortiert ist und die Zustellentität basierend auf einer Eingangsnummer die der Eingangsnummer zugeordnete Sendung innerhalb der sortierten Anzahl von Sendungen auffinden kann.
Ausführungsform 19:
   Verfahren nach Ausführungsform 18, wobei für zumindest einen Teil der Anzahl von Sendungen zusammen mit der Eingangsnummer sendungsbezogene Informationen erhalten werden, und wobei für den Teil der Anzahl von Sendungen das Ausgeben der Eingangsnummern zusammen mit den sendungsbezogenen Informationen erfolgt.
Ausführungsform 20:
   Verfahren nach einer der Ausführungsformen 18 oder 19, wobei jeweils nur ein Teil der Eingangsnummern aller in der sortierten Abfolge von Eingangsnummern enthaltenen Eingangsnummern ausgegeben wird, ferner umfassend:
   - Bestimmen, welcher Teil der Eingangsnummern aller in der Eingangsnummernfolge enthaltenen Eingangsnummern ausgegeben wird.
Ausführungsform 21:
   Verfahren nach Ausführungsform 20, wobei das Bestimmen, welcher Teil der Eingangsnummern ausgegeben wird, auf den Zieladressen der zugeordneten Sendungen und der Position der Zustellentität basiert
Ausführungsform 22:
   Verfahren nach einer der Ausführungsformen 18-21, wobei die Eingangsnummern den Sendungen der Anzahl von Sendungen gemäß dem Verfahren nach einem der Ausführungsformen 1-16 zugewiesen worden sind.
Ausführungsform 23:
   Vorrichtung oder System aus zumindest zwei Vorrichtungen, eingerichtet zur Ausführung und/oder Steuerung des Verfahrens nach einer der Ausführungsformen 1 bis 17 oder umfassend Mittel zur Ausführung und/oder Steuerung der Schritte des Verfahrens nach einer der Ausführungsformen 1 bis 17.
Ausführungsform 24:
   Vorrichtung, eingerichtet zur Ausführung und/oder Steuerung des Verfahrens nach einer der Ausführungsformen 18 bis 22 oder umfassend Mittel zur Ausführung des Verfahrens nach einer der Ausführungsformen 18 bis 22.
Ausführungsform 25:
   Computerprogramm, umfassend Programmanweisungen, die einen Prozessor zur Ausführung und/oder Steuerung des Verfahrens gemäß einer der Ausführungsformen 1 bis 17 veranlassen, wenn das Computerprogramm auf dem Prozessor läuft
Ausführungsform 26:
   Computerprogramm, umfassend Programmanweisungen, die einen Prozessor zur Ausführung und/oder Steuerung des Verfahrens gemäß einer der Ausführungsformen 18 bis 22 veranlassen, wenn das Computerprogramm auf dem Prozessor läuft

## Patentansprüche

1. Verfahren umfassend:
- Bestimmen, für jede Sendung aus einer Anzahl von Sendungen, eines jeweiligen Sortierziels aus einer Anzahl von Sortierzielen;
- Zuweisen, zu jeder der Sendungen aus der Anzahl von Sendungen, einer jeweiligen, sortierzielspezifischen Eingangsnummer;
wobei das Verfahren für zumindest ein Sortierziel der Anzahl von Sortierzielen ferner umfasst:
o Einordnen derjenigen Sendungen, für die das Sortierziel bestimmt wurde, in das Sortierziel basierend auf den diesen Sendungen zugewiesenen sortierzielspezifischen Eingangsnummern;
und
▪ Bestimmen einer Zustellreihenfolge für die in das Sortierziel eingeordneten Sendungen basierend auf einer Sendungsinformation; und
▪ Ausgeben, insbesondere an ein mobiles Gerät, einer entsprechend der Zustellreihenfolge der in das Sortierziel eingeordneten Sendungen sortierten Abfolge der diesen Sendungen zugewiesenen Eingangsnummern;
oder
▪ Ausgeben, insbesondere an ein mobiles Gerät, zu jeder derjenigen Sendungen, für die das Sortierziel bestimmt wurde, der jeweiligen, zugewiesenen Eingangsnummer und einer jeweiligen Sendungsinformation, wobei basierend auf den Sendungsinformationen der Sendungen eine Zustellreihenfolge für diese Sendungen bestimmt werden kann.

2. Verfahren nach Anspruch 1, wobei die jeweilige Eingangsnummer einer Sendung einer Anzahl von Sendungen entspricht, für die beim Zuweisen der Eingangsnummer ebenfalls das für diese Sendung bestimmte Sortierziel bestimmt worden ist, oder mit dieser Anzahl in Beziehung steht.

3. Verfahren nach einem der vorherigen Ansprüche, ferner umfassend:
- Bestimmen, für jede der Sendungen aus der Anzahl von Sendungen, einer jeweiligen Zieladresse, wobei das Bestimmen des jeweiligen Sortierziels zumindest auf der jeweiligen Zieladresse basiert.

4. Verfahren nach Anspruch 3, wobei jedem Sortierziel aus der Anzahl von Sortierzielen eine oder mehrere Zustelltouren zugeordnet sind; und wobei das Bestimmen des jeweiligen Sortierziels zumindest auf dem Bestimmen der Zustelltour, die die jeweilige Zieladresse enthält, basiert.

5. Verfahren nach Anspruch 4, wobei jedem Sortierziel aus der Anzahl von Sortierzielen genau eine Zustelltour zugeordnet ist und/oder wobei einer Zustelltour genau ein Sortierziel zugeordnet ist.

6. Verfahren nach einem der vorherigen Ansprüche, ferner umfassend:
- Assoziieren der jeweiligen Sendung mit einer Information, wobei basierend auf der Information zumindest die Eingangsnummer ermittelbar ist, wobei das Assoziieren insbesondere durch Erstellen eines Etiketts und Anbringen des Etiketts auf die jeweilige Sendung erfolgt

7. Verfahren nach Anspruch 6, ferner umfassend:
- Befördern der Sendungen zum jeweiligen bestimmten Sortierziel, wobei zumindest ein Teil der Information maschinenlesbar ist, und wobei die Beförderung der Sendung zu dem jeweiligen bestimmten Sortierziel zumindest auf dem maschinenlesbaren Teil der Information basiert.

8. Verfahren nach einem der Ansprüche 6 oder 7, wobei zumindest ein Teil der Information maschinenlesbar ist, und wobei das Einordnen der Sendungen in das jeweilige Sortierziel zumindest teilweise automatisiert erfolgt und zumindest auf dem maschinenlesbaren Teil der Information basiert

9. Verfahren nach Anspruch 6, ferner umfassend:
- Befördern der Sendungen zum jeweiligen bestimmten Sortierziel, wobei zumindest ein Teil der Information menschenlesbar ist, und wobei die Beförderung der Sendungen zu dem jeweiligen Sortierziel zumindest teilweise manuell erfolgt und zumindest auf dem menschenlesbaren Teil der Information basiert.

10. Verfahren nach einem der Ansprüche 6 oder 9, wobei zumindest ein Teil der Information menschenlesbar ist, und wobei das Einordnen der Sendungen in das jeweilige Sortierziel zumindest teilweise manuell erfolgt und zumindest auf dem menschenlesbaren Teil der Information basiert

11. Verfahren nach einem der vorherigen Ansprüche, wobei die Sendungsinformation zumindest die jeweilige Zieladresse der Sendung enthält, und wobei die Bestimmung der Zustellreihenfolge zumindest auf der Gangfolge der Zustelltouren basiert, die die Zieladressen umfassen.

12. Verfahren umfassend:
o Erhalten einer sortierten Abfolge von Eingangsnummern, wobei eine Eingangsnummer jeweils einer Sendung aus einer Anzahl von Sendungen zugewiesen ist, und wobei die Abfolge der Eingangsnummern entsprechend einer Zustellreihenfolge der zugeordneten Sendungen sortiert ist;
oder
o Erhalten, für jede Sendung aus einer Anzahl von Sendungen, einer der jeweiligen Sendung zugewiesenen Eingangsnummer und einer jeweiligen Sendungsinformation, wobei basierend auf den Sendungsinformationen der Sendungen eine Zustellreihenfolge für diese Sendungen bestimmt werden kann; und
o Bestimmen einer Zustellreihenfolge für die Sendungen zumindest basierend auf den Sendungsinformationen; und
o Bestimmen einer entsprechend der Zustellreihenfolge der Sendungen sortierten Abfolge der diesen Sendungen zugewiesenen Eingangsnummern;
und
- Erfassen, durch eine Zustellentität, oder Ausgeben, an eine Zustellentität, der Eingangsnummern in der sortierten Abfolge, wobei die Anzahl von Sendungen nach den Eingangsnummern sortiert ist und die Zustellentität basierend auf einer Eingangsnummer die der Eingangsnummer zugeordnete Sendung innerhalb der sortierten Anzahl von Sendungen auffinden kann.

13. Verfahren nach Anspruch 12, wobei für zumindest einen Teil der Anzahl von Sendungen zusammen mit der Eingangsnummer sendungsbezogene Informationen erhalten werden, und wobei für den Teil der Anzahl von Sendungen das Ausgeben der Eingangsnummern zusammen mit den sendungsbezogenen Informationen erfolgt

14. Verfahren nach einem der Ansprüche 12 oder 13, wobei jeweils nur ein Teil der Eingangsnummern aller in der sortierten Abfolge von Eingangsnummern enthaltenen Eingangsnummern ausgegeben wird, ferner umfassend:
- Bestimmen, welcher Teil der Eingangsnummern aller in der Eingangsnummernfolge enthaltenen Eingangsnummern ausgegeben wird, wobei das Bestimmen insbesondere auf den Zieladressen der zugeordneten Sendungen und der Position der Zustellentität basiert

15. Verfahren nach einem der Ansprüche 12-14, wobei die Eingangsnummern den Sendungen der Anzahl von Sendungen gemäß dem Verfahren nach einem der Ansprüche 1-11 zugewiesen worden sind.
